# EUROPÄISCHE PATENTANMELDUNG

(11) **EP 4 650 134 A1**
(43) Veröffentlichungstag der Anmeldung: **19.11.2025**
(21) Anmeldenummer: 24176713.6
(22) Anmeldetag: 17.05.2024
(51) Int. Cl.: B29B 17/02, G01N 30/02, G01N 30/08, G01N 30/12

(54) **VERFAHREN UND ANLAGE ZUR DETEKTION VON MINDESTENS EINEM FLÜCHTIGEN STÖRSTOFF IN EINEM SCHMELZBAREN MATERIAL**

(71) Anmelder: Fraunhofer-Gesellschaft zur Förderung der angewandten Forschung e.V., 80686 München (DE)
(72) Erfinder: Die Erfindernennung liegt noch nicht vor
(74) Vertreter: Pfenning, Meinig & Partner mbB

(57) **Zusammenfassung**

Es wird ein Verfahren zur Detektion von mindestens einem flüchtigen Störstoff in einem schmelzbaren Material bereitgestellt. Hierbei wird mindestens ein schmelzbares Material, das einen flüchtigen Störstoff enthält, und eine Vorrichtung, die zum Schmelzen und Fördern des mindestens einen schmelzbaren Materials geeignet ist, bereitgestellt. Das mindestens eine schmelzbare Material wird in einen Innenraum der Vorrichtung hinein gefördert und dort geschmolzen. Ein Gas, das den mindestens einen flüchtigen Störstoff enthält, wird aus dem Innenraum der Vorrichtung in eine Fluidleitung gefördert, die mit einem Anschluss der Vorrichtung verbunden ist und der mindestens eine flüchtige Störstoff wird zu mindestens einem Detektor gefördert, wo eine Detektion des mindestens einen flüchtigen Störstoffs erfolgt. Zudem wird eine Anlage zur Detektion von mindestens einem flüchtigen Störstoff in einem schmelzbaren Material bereitgestellt.

## Beschreibung

Es wird ein Verfahren zur Detektion von mindestens einem flüchtigen Störstoff in einem schmelzbaren Material bereitgestellt. Hierbei wird mindestens ein schmelzbares Material, das einen flüchtigen Störstoff enthält, und eine Vorrichtung, die zum Schmelzen und Fördern des mindestens einen schmelzbaren Materials geeignet ist, bereitgestellt. Das mindestens eine schmelzbare Material wird in einen Innenraum der Vorrichtung hinein gefördert und dort geschmolzen. Ein Gas, das den mindestens einen flüchtigen Störstoff enthält, wird aus dem Innenraum der Vorrichtung in eine Fluidleitung gefördert, die mit einem Anschluss der Vorrichtung verbunden ist und der mindestens eine flüchtige Störstoff wird zu mindestens einem Detektor gefördert, wo eine Detektion des mindestens einen flüchtigen Störstoffs erfolgt. Zudem wird eine Anlage zur Detektion von mindestens einem flüchtigen Störstoff in einem schmelzbaren Material bereitgestellt.

Im Zuge einer geschlossenen Kreislaufführung bei der Wiederverwertung von Kunststoffen ist eine grundlegende Herausforderung, die stoffliche Wiederwertung in eine gleichwertige Anwendung zu ermöglichen. Das gilt besonders für hochwertige Kunststoffe, die in anspruchsvollen Anwendungen wie Lebensmittel und Kosmetikverpackungen eingesetzt werden. Insbesondere Störstoffe, die potenziell gesundheitsschädlich sind oder unerwünschte Gerüche verursachen, verhindern eine gleichartige Wiederverwendung.

Es sind Verfahren bekannt, bei denen eine Sortierung von Kunststoffen nach deren Sorte erfolgt, wobei die Sortierung beispielsweise mechanisch durchgeführt wird, unterstützt durch Messungen mittels NIR-Spektroskopie.

Da jedoch jedes Verpackungsteil aus Kunststoff eine individuelle Lebensgeschichte aufweist und durch die ursprünglich enthaltenen Produkte und spätere Verunreinigungen einen ebenso individuellen Störstoffgehalt, kann eine reine Sortierung nach dem jeweiligen Grundmaterial und eine integrale Bewertung eines Produktionsloses nicht die hohen Ansprüche erfüllen, die an eine sichere und gleichzeitig wirtschaftliche Abtrennung von Störstoffen für die genannten Zielverwendungen gestellt werden. In den bekannten Verfahren lediglich Stichproben des erzeugten Materials mit Offline-Methoden bewertet, sodass allenfalls Durchschnittsinformationen über eine große Materialcharge gewonnen werden können und keine differenzierte und ortsselektive Bewertung und Behandlung einer Materialcharge möglich ist. Damit muss im Falle einer festgestellten Kontamination die gesamte Charge verworfen werden und die gesetzlichen Forderungen nach einer möglichst umfassenden Wiederverwendung im Sinne der geschlossenen Kreislaufführung können nicht erfüllt werden.

Darüber hinaus wurde im Bereich der Kunststoffverarbeitung bislang hauptsächlich mit homogenen Ausgangsstoffen und statischen Rezepturen bzw. Prozessparametern gearbeitet. Die Umstellung auf Kunststoff-Rezyklate hebt die Hypothese der Homogenität auf, d. h. die Verfahren müssen sich adaptiv an die momentan vorliegende Materialqualität anpassen. Zusätzlich sollen Störstoffe erkannt und kontaminierte Materialportionen ausgesondert werden, das betrifft insbesondere von den Verbrauchern erfasste Wertstoffe (Post-Consumer-Rezyklate). Besonders hochwertige Polyolefine (z. B. Polypropylen oder Polyethylen) mit kritischen Einsatzgebieten in Kosmetik-, Pharma- und Lebensmittelverpackungen müssen hierauf eng überwacht werden.

Zur Optimierung der Parameter an eine momentan vorliegende Materialqualität (z. B. hinsichtlich deren Störstoffart und Störstoffkonzentration) werden in den bekannten Verfahren vor oder nach einer Verarbeitung eines konkret vorliegenden Kunststoffs (d. h. "offline") Laboruntersuchungen durchgeführt, beispielsweise nasschemische und/oder analytische Verfahren (DE 10 2022 204421 A1). Diese Vorgehensweise ist nicht sehr exakt, zeitaufwändig und unökonomisch.

Es gibt einen Bedarf an einer exakten, schnellen und ökonomischen Prozessüberwachung von Verarbeitungssystemen für schmelzbare Materialien, die mindestens einen Störstoff enthalten (z. B. Kunststoffe oder Kunststoff-Rezyklate) hinsichtlich der chemischen Reinheit der schmelzbaren Materialien (z. B. in Bezug auf deren Störstoffgehalt). Dies betrifft beispielsweise eine Überprüfung der Reinheit von besagten Materialien in Bezug auf die mindestens eine flüchtige Verbindung (z. B. einen Geruchsstoff und/oder einen Gefahrenstoff).

Ausgehend hiervon war es die Aufgabe der vorliegenden Erfindung, ein Verfahren und eine Anlage zur Detektion von mindestens einem flüchtigen Störstoff in einem schmelzbaren Material bereitzustellen, welche zumindest einen im Stand der Technik bekannten Nachteil nicht aufweisen. Insbesondere sollte es mit dem Verfahren und mit der Anlage möglich sein, auf möglichst genaue, schnelle und/oder ökonomische Art und Weise mindestens einen flüchtigen Störstoff in einem schmelzbaren Material zu detektieren.

Die Aufgabe wird gelöst durch das Verfahren mit den Merkmalen von Anspruch 1 und die Anlage mit den Merkmalen von Anspruch 9. Die abhängigen Ansprüche zeigen vorteilhafte Weiterbildungen auf.

Erfindungsgemäß wird ein Verfahren zur Detektion von mindestens einem flüchtigen Störstoff in einem schmelzbaren Material bereitgestellt, umfassend oder bestehend aus den folgenden Schritten:
a) Bereitstellen von mindestens einem schmelzbaren Material, das einen flüchtigen Störstoff enthält;
b) Bereitstellen von einer Vorrichtung, die zum Schmelzen und Fördern des mindestens einen schmelzbaren Materials geeignet ist und die einen Innenraum, einen Anschluss für eine Fluidleitung, der sich vom Innenraum zu einem Außenraum des Vorrichtung erstreckt, und eine Fluidleitung, die mit dem Anschluss fluidleitend verbunden ist, enthält;
c) Fördern von dem mindestens einen schmelzbaren Material, das den flüchtigen Störstoff enthält, in den Innenraum der Vorrichtung hinein und schmelzen des mindestens einen schmelzbaren Materials in der Vorrichtung;
d) Fördern von einem Gas, das den mindestens einen flüchtigen Störstoff des Materials enthält, aus dem Innenraum der Vorrichtung in die Fluidleitung;
e) Fördern des mindestens einen flüchtigen Störstoffs (z.B. über die Fluidleitung oder zumindest eine weitere Fluidleitung) zu mindestens einem Detektor (z.B. in dem Gas aus dem Innenraum der Vorrichtung oder in einem weiteren Gas), wobei der mindestens eine Detektor zur Detektion des mindestens einen flüchtigen Störstoffs geeignet ist; und
f) Detektieren des mindestens einen flüchtigen Störstoffs mit dem mindestens einen Detektor.

Das Verfahren hat den Vorteil, dass auf sehr genaue, schnelle und ökonomische Art und Weise mindestens ein flüchtiger Störstoff in einem schmelzbaren Material detektiert werden kann.

Dies liegt darin begründet, dass die Detektion des mindestens einen Störstoffs nicht an analytischen Proben des schmelzbaren Materials zeitlich vor oder nach einem Schmelzen und Fördern des mindestens einen schmelzbaren Materials in präparativem Maßstab erfolgt, sondern während einem Schmelzen und Fördern des mindestens einen schmelzbaren Materials in präparativem Maßstab erfolgen kann (d. h. "online" im industriellen Verarbeitungsprozess des schmelzbaren Materials erfolgen kann). Dies ist möglich, da die Vorrichtung zum Schmelzen und Fördern des mindestens einen schmelzbaren Materials einen Anschluss an eine Fluidleitung aufweist, die den Innenraum der Vorrichtung fluidisch mit mindestens einem Detektor verbindet. Dadurch kann zeitlich während dem Verarbeitungsverfahren im industriellen Maßstab (d. h. "online") das mindestens eine schmelzbare Material auf darin enthaltene flüchtige Störstoffe untersucht werden. Da die Vorrichtung das schmelzbare Material an dem Anschluss mit der Fluidleitung vorbeitransportiert, kann zudem eine ortsselektive Erfassung von Störstoffen in dem schmelzbaren Material (und ggf. eine darauf basierte Sortierung des schmelzbaren Materials) erfolgen. Das erfindungsgemäße Verfahren erlaubt somit eine verglichen mit bekannten Verfahren genauere (z. B. ortsselektive und unverfälschte), schnellere und ökonomischere Detektion von mindestens einem flüchtigen Störstoff in dem schmelzbaren Material.

Bei dem mindestens einen flüchtigen Störstoff in dem schmelzbaren Material kann es sich um eine chemische Verbindung handeln, die von einer menschlichen und/oder tierischen Nase detektiert werden kann (d. h. es kann sich um einen Geruchsstoff handeln). Alternativ oder zusätzlich kann es sich bei dem mindestens einen flüchtigen Störstoff in dem schmelzbaren Material um eine chemische Verbindung handeln, die eine gesundheitsschädliche Wirkung auf den Menschen und/oder auf ein Tier ausübt (d. h. es kann sich um einen Gefahrenstoff handeln).

Schritt c) des Verfahrens kann umfassen, das mindestens eine schmelzbare Material, das den flüchtigen Störstoff enthält, innerhalb des Innenraums der Vorrichtung zu fördern, bevorzugt zu einem Ausgang der Vorrichtung.

In einer bevorzugten Ausführungsform enthält die Vorrichtung, die zum Schmelzen und Fördern des mindestens einen schmelzbaren Materials geeignet ist, einen Extruder oder besteht daraus.

In einer weiteren bevorzugten Ausführungsform des Verfahrens wird in dem Innenraum der Vorrichtung ein schmelzbares Material bereitgestellt, das ein recycliertes Material enthält oder daraus besteht. Von recyclierten Materialien ist bekannt, dass sie regelmäßig mindestens einen Störstoff (oft auch eine Vielzahl an Störstoffen) enthalten.

Ferner kann in dem Innenraum der Vorrichtung ein schmelzbares Material bereitgestellt werden, das einen Kunststoff enthält oder daraus besteht. Kunststoffe sind dafür bekannt, mindestens einen Störstoff zu enthalten (z. B. einen Weichmacher). Der Kunststoff kann ausgewählt sein aus der Gruppe bestehend aus Polyolefinen, Polyester, Polyamide und Kombinationen hiervon, wobei der Kunststoff besonders bevorzugt ein Polyolefin ist, insbesondere ein Polyolefin-Rezyklat ist.

In dem Verfahren kann der Anschluss der Vorrichtung über einem Kopfraum einer Schmelzoberfläche des im Innenraum der Vorrichtung vorliegenden, geschmolzenen Materials angeordnet sein, wobei der Anschluss optional ein Entgasungsanschluss der Vorrichtung ist. Enthält die Vorrichtung einen Extruder oder besteht daraus, kann der Anschluss ein Entgasungsanschluss des Extruders sein. Diese Anordnung des Anschlusses erlaubt es, ein Gas, das den mindestens einen flüchtigen Störstoff enthält, mit hoher Effizienz in Richtung des mindestens einen Detektors zu befördern.

In dem Verfahren kann das Fördern von dem Gas aus dem Innenraum der Vorrichtung in die Fluidleitung umfassen, eine fluidische Verbindung der Fluidleitung mit einer weiteren Fluidleitung, die mit einer Umgebung eines die Vorrichtung enthaltenden Gebäudes verbunden ist, zu blockieren. Das Blockieren umfasst bevorzugt ein Schalten eines Ventils der Fluidleitung oder der zweiten Fluidleitung. Diese Ausführungsform ist vorteilhaft, falls die Fluidleitung zumindest ein Teil einer Entgasungsleitung der Vorrichtung ist, die in die Umgebung der Vorrichtung führt. Es kann somit verhindert werden, dass Gas bei einer Förderung von Gas zum mindestens einen Detektor auch in die Umgebung entweicht. Dadurch steigt die Detektionssensitivität.

Das Fördern von dem Gas aus dem Innenraum der Vorrichtung in die Fluidleitung kann mithilfe einer Pumpe, bevorzugt eine Vakuumpumpe, erfolgen. Die Pumpe kann eine Pumpe sein, die zur Entgasung der Vorrichtung eingesetzt wird. Hierbei kann das Fördern von dem Gas aus dem Innenraum der Vorrichtung in die Fluidleitung umfassen, an die Fluidleitung (über die Pumpe) einen Unterdruck anzulegen, bevorzugt dergestalt, dass ein Druck in der Fluidleitung ≤ 100 mbar, bevorzugt ≤ 80 mbar, besonders bevorzugt ≤ 75 mbar, beträgt. Das Anlegen eines Unterdrucks in diesen Bereichen hat sich als besonders vorteilhaft herausgestellt, eine hohe Menge von mindestens einem Störstoff aus dem geschmolzenen Material zu entfernen und zum mindestens einen Detektor zu fördern, d. h. die Detektionssensitivität ist sehr hoch.

Ferner kann das Fördern von dem Gas aus dem Innenraum der Vorrichtung in die Fluidleitung mithilfe eines Spülgases erfolgen, wobei das Spülgas bevorzugt Stickstoff enthält oder daraus besteht. In dieser Ausführungsform kann auf eine Pumpe zur Förderung verzichtet werden, wodurch das Verfahren kostengünstiger durchgeführt werden kann.

In dem Verfahren kann nach dem Fördern von dem Gas aus dem Innenraum der Vorrichtung in die Fluidleitung und vor dem Fördern des mindestens einen flüchtigen Störstoffs zu dem mindestens einem Detektor der Druck des Gases der Fluidleitung erhöht werden, bevorzugt auf einen Druck von >_ 1000 mbar, bevorzugt ≥ 2000 mbar. Diese Ausführungsform hat den Vorteil, dass das Gas direkt zu einem Gaschromatographen als Detektor gefördert werden kann und direkt eine Gaschromatographie mit dem Gas zur Detektion von mindestens einem Störstoff durchgeführt werden kann. Kurz gesagt kann die Detektion von mindestens einem Störstoff über Gaschromatographie sehr schnell (d. h. "online") erfolgen. In dieser Ausführungsform wird bevorzugt ein Gas aus einer Gasquelle in die Fluidleitung eingeleitet. Das Gas ist besonders bevorzugt ausgewählt ist aus der Gruppe bestehend aus Luft, Stickstoff, Edelgas und Kombinationen hiervon.

Ferner kann in dem Verfahren nach dem Fördern von dem Gas aus dem Innenraum der Vorrichtung in die Fluidleitung und vor dem Fördern des mindestens einen flüchtigen Störstoffs zu dem mindestens einem Detektor das Gas der Fluidleitung temperiert werden, bevorzugt auf eine Temperatur im Bereich einer Temperatur, welche das geschmolzene Material im Innenraum der Vorrichtung aufweist. Dies hat den Vorteil, dass sich auf dem Weg zum Detektor kein Kondensat von mindestens einem Störstoff bildet, der in dem Gas enthalten ist, wodurch alle im Gas enthaltenden Störstoffe mit einer höheren Genauigkeit erfasst werden können. Das Temperieren erfolgt bevorzugt mithilfe eines Heizelements.

Zudem kann in dem Verfahren nach dem Fördern von dem Gas aus dem Innenraum der Vorrichtung in die Fluidleitung und vor dem Fördern des mindestens einen flüchtigen Störstoffs zu dem mindestens einem Detektor das Gas der Fluidleitung durch mindestens eine Vorrichtung geleitet wird, die zur Aufkonzentration des mindestens einen flüchtigen Störstoffs geeignet ist, und der mindestens einen flüchtigen Störstoff in dieser mindestens einen Vorrichtung konzentriert wird und anschließend der mindestens eine konzentrierte flüchtige Störstoff aus der mindestens einen Vorrichtung freigesetzt wird. Das Aufkonzentrieren kann über ein Kondensieren, Adsorbieren und/oder Absorbieren des mindestens einen flüchtigen Störstoffs in der mindestens einen Vorrichtung erfolgen. Das Freisetzen kann über eine Erhöhung der Temperatur der mindestens einen Vorrichtung erfolgen. Diese Ausführungsform hat den Vorteil, dass dem mindestens einen Detektor ein Gas zugeleitet wird, das eine höhere Konzentration des mindestens einen Störstoffs enthält als das Ausgangsgas, das aus der Vorrichtung gefördert wurde, in der das schmelzbare Material vorliegt. Dadurch erhöht sich die Sensitivität der Detektion des mindestens einen Störstoffs.

Die mindestens eine Vorrichtung, die zur Aufkonzentration des mindestens einen flüchtigen Störstoffs geeignet ist, kann mindestens eine Kühlfalle, bevorzugt mindestens zwei Kühlfallen, besonders bevorzugt mindestens drei Kühlfallen, ganz besonders bevorzugt mindestens vier Kühlfallen, enthalten oder daraus bestehen. Hierbei können die mindestens zwei Kühlfallen, mindestens drei Kühlfallen und/oder mindestens vier Kühlfallen, in Serie entlang der Fluidleitung angeordnet sein. Ferner können die mindestens zwei Kühlfallen, mindestens drei Kühlfallen und/oder mindestens vier Kühlfallen, auf zueinander verschiedene Temperaturen temperiert sein. Die Verwendung von mindestens zwei Kühlfallen auf einer unterschiedlichen Temperatur erlaubt es, verschiedene flüchtige Störstoffe des Gases lokal zu konzentrieren und gezielt zeitlich versetzt (z. B. durch eine zeitlich versetzte Temperaturerhöhung der jeweiligen Kühlfalle) freizusetzen und zum mindestens einen Detektor zu fördern. Dies erlaubt es, Interferenzen von verschiedenen Störstoffen bei deren Detektion zu vermeiden und eine genauere Detektion von einzelnen Störstoffen im schmelzbaren Material zu ermöglichen.

Die mindestens eine Vorrichtung, die zur Aufkonzentration des mindestens einen flüchtigen Störstoffs geeignet ist, kann ferner mindestens einen Behälter, der ein Material enthält, das geeignet ist, den mindestens einen flüchtigen Störstoff zu absorbieren und/oder zu adsorbieren, bevorzugt zudem mindestens einen zweiten Behälter, der ein Material enthält, das geeignet ist, den mindestens einen flüchtigen Störstoff zu absorbieren und/oder zu adsorbieren, enthalten oder daraus bestehen. Der Vorteil an dem mindestens einen Behälter ist, dass mindestens ein Störstoff des Gases selektiv und unabhängig von seiner Kondensationstemperatur aufkonzentriert werden kann. Der mindestens eine zweite Behälter kann in einer weiteren Fluidleitung angeordnet sein, die stromaufwärts des mindestens einen Behälters von der Fluidleitung abzweigt und fluidisch mit dem mindestens einen Detektor verbunden ist, optional dergestalt, dass die weitere Fluidleitung stromabwärts des mindestens einen Behälters in die Fluidleitung mündet (d. h. die mindestens zwei Behälter können fluidisch parallel angeordnet sein). Der Vorteil hierbei ist, dass während einer Freisetzung von mindestens einem Störstoff aus dem ersten Behälter und dessen Detektion durch den mindestens einen Detektor in den zweiten Behälter Gas mit Störstoff eingeleitet und Störstoff dort aufkonzentriert werden kann. Somit wird es möglich, Totzeiten, in denen keine Detektion von Störstoff stattfindet, zu reduzieren bis gänzlich zu vermeiden, wodurch eine schnellere und noch besser ortsaufgelöste Detektion von mindestens einem Störstoff in dem schmelzbaren Material möglich wird.

Abgesehen davon kann die mindestens eine Vorrichtung, die zur Aufkonzentration des mindestens einen flüchtigen Störstoffs geeignet ist, mindestens ein Heizelement aufweisen, wobei das mindestens eine Heizelement bevorzugt ausgewählt ist aus der Gruppe bestehend aus Widerstandsheizung, Peltierelement, Strahlungsheizung und Kombinationen hiervon. Der Vorteil hierbei ist, dass durch das mindestens eine Heizelement eine gesteuerte und damit gezielte Freisetzung von aufkonzentriertem Störstoff aus der Vorrichtung möglich ist.

Darüber hinaus kann die mindestens eine Vorrichtung, die zur Aufkonzentration des mindestens einen flüchtigen Störstoffs geeignet ist, mindestens ein Kühlelement aufweisen, wobei das mindestens eine Kühlelement bevorzugt ausgewählt ist aus der Gruppe bestehend aus aktives Kühlelement, passives Kühlelement und Kombinationen hiervon. Der Vorteil hierbei ist, dass die Aufkonzentration des mindestens einen Störstoffs durch ein Absenken der Temperatur verstärkt werden kann und somit die Sensitivität der Detektion des mindestens einen Störstoffs erhöht werden kann. Das aktive Kühlelement ist bevorzugt ausgewählt ist aus der Gruppe bestehend aus Peltierelement, Heatpipes, Ventilator, elektrisch betriebenes Kühlsystem mit Kältemittel und Kombinationen hiervon. Das passive Kühlelement ist bevorzugt ausgewählt aus der Gruppe bestehend aus Radiatorelement, flüssige Gase und Kombinationen hiervon.

In dem Verfahren kann das Fördern des mindestens einen flüchtigen Störstoffs zu dem mindestens einen Detektor mithilfe einer Pumpe durchgeführt werden, wobei die Pumpe bevorzugt in der Fluidleitung oder in einer Bypass-Fluidleitung zur Fluidleitung enthalten ist.

Ferner kann in dem Verfahren das Fördern des mindestens einen flüchtigen Störstoffs zu dem mindestens einen Detektor mithilfe eines Gases aus einer Gasquelle durchgeführt wird, wobei die Gasquelle bevorzugt fluidisch mit der Fluidleitung verbunden ist. Die Gasquelle kann ein Gas enthalten, das ausgewählt ist aus der Gruppe bestehend aus Luft, Stickstoff, Edelgas und Kombinationen hiervon. Der Vorteil an dieser Ausführungsform ist, dass auf die Verwendung einer Pumpe verzichtet werden kann, wodurch das Verfahren kostengünstiger durchgeführt werden kann.

Der in dem Verfahren eingesetzte mindestens eine Detektor kann mindestens einen Gaschromatographen, bevorzugt mindestens zwei Gaschromatographen, enthalten oder daraus bestehen und eine Gaschromatographie zum Detektieren des mindestens einen flüchtigen Störstoffs durchgeführt werden. Bevorzugt wird der mindestens eine flüchtige Störstoff hierbei mithilfe eines Halbleiter-Gassensors detektiert.

Ferner kann der in dem Verfahren eingesetzte mindestens eine Detektor mindestens ein Massenspektrometer enthalten oder daraus bestehen und eine Massenspektrometrie, bevorzugt eine PTR-Massenspektrometrie, zum Detektieren des mindestens einen flüchtigen Störstoffs durchgeführt werden.

Abgesehen davon kann der in dem Verfahren eingesetzte mindestens eine Detektor mindestens einen Gasdetektor, bevorzugt einen Array von mindestens zwei Gasdetektoren, enthalten oder daraus bestehen und eine Gasdetektion zum Detektieren des mindestens einen flüchtigen Störstoffs durchgeführt werden. Der mindestens eine Gasdetektor (bevorzugt die mindestens zwei Gasdetektoren) kann ein Gassensor sein.

In einer bevorzugten Ausführungsform umfasst das erfindungsgemäße Verfahren ferner eine Berechnung einer Konzentration, welche der mindestens eine flüchtige Störstoff in einem Teil im Innenraum der Vorrichtung aufweist, der sich im Bereich des Anschlusses Vorrichtung befindet. Bei der Berechnung können Parameter berücksichtigt werden, die ausgewählt sind aus der Gruppe bestehend aus einer Temperatur des geschmolzenen Materials, einem Verteilkoeffizienten des Störstoffs zwischen dem Gas und dem geschmolzenen Material, einem Druck des Gases, einem Fluss des Gases, einem Fluss des geschmolzenen Materials, einer Viskosität des geschmolzenen Materials und Kombinationen hiervon. Die Berechnung kann ferner Regel-basiert, Modell-basiert und/oder mit Hilfe von künstlicher Intelligenz erfolgen. Der Vorteil hierbei ist, dass nicht nur eine qualitative Aussage über die Anwesenheit von mindestens einem Störstoff in einem Abschnitt des geschmolzenen Materials entlang der Förderrichtung der Vorrichtung getroffen werden kann, sondern auch eine quantitative Aussage über dessen Konzentration in besagtem Abschnitt. Dies erlaubt es, zu prüfen, ob bestimmte Abschnitte des geschmolzenen Materials bestimmte Grenzwerte für den mindestens einen Störstoff erfüllen, was einen Materialausschuss reduzieren kann und das Verfahren noch ökonomischer gestalten kann.

Das erfindungsgemäße Verfahren kann zudem ein Fraktionieren von Material, das aus der Vorrichtung austritt, basierend auf der berechneten Konzentration des mindestens einen flüchtigen Störstoffs, umfassen. Das Fraktionieren kann über einen Transport des aus der Vorrichtung austretenden Materials in verschiedene Behälter erfolgen, wobei der Transport besonders bevorzugt über ein Förderband erfolgt. Der Vorteil hierbei ist, dass das schmelzbare Material, das aus der Vorrichtung austritt, nach dessen Störstoffgehalt sortiert werden kann. Ausschuss kann reduziert werden und das Verfahren erlaubt eine ökonomischere Bereitstellung von schmelzbarem Material, das bestimmte Grenzwerte für den mindestens einen Störstoff erfüllt.

Erfindungsgemäß wird ferner eine Anlage zur Detektion von mindestens einem flüchtigen Störstoff in einem schmelzbaren Material bereitgestellt, enthaltend oder bestehend aus:
a) eine Vorrichtung, die zum Schmelzen und Fördern von mindestens einem schmelzbaren Material geeignet ist und die einen Innenraum, einen Anschluss für eine Fluidleitung, der sich vom Innenraum zu einem Außenraum der Vorrichtung erstreckt, und eine Fluidleitung, die mit dem Anschluss fluidleitend verbunden ist, enthält;
b) mindestens ein Detektor, der zur Detektion von mindestens einem flüchtigen Störstoff, der in mindestens einem schmelzbaren Material enthalten ist, geeignet ist; und
c) eine Steuereinheit;

wobei die Steuereinheit konfiguriert ist, die Anlage zu veranlassen,
ein Gas, das mindestens einen flüchtigen Störstoff eines schmelzbaren Materials enthält, aus dem Innenraum der Vorrichtung in die Fluidleitung zu fördern;
den mindestens einen flüchtigen Störstoff (z.B. über die Fluidleitung oder zumindest eine weitere Fluidleitung der Anlage) zu dem mindestens einem Detektor zu fördern (z.B. in dem Gas aus dem Innenraum der Vorrichtung oder in einem weiteren Gas aus einer Gasquelle der Anlage), und
den mindestens einen flüchtigen Störstoff mit dem mindestens einen Detektor zu detektieren.

Die erfindungsgemäße Anlage weist die gleichen Vorteile wie das erfindungsgemäße Verfahren auf. Beispielsweise erlaubt es die erfindungsgemäße Anlage, auf sehr genaue, schnelle und ökonomische Art und Weise mindestens ein flüchtiger Störstoff in einem schmelzbaren Material zu detektieren.

Die erfindungsgemäße Anlage kann geeignet sein, das erfindungsgemäße Verfahren durchzuführen. Hierbei kann die Steuereinheit der erfindungsgemäßen Anlage konfiguriert sein, zu veranlassen, das erfindungsgemäße Verfahren durchzuführen.

Optional enthält die erfindungsgemäße Anlage (bereits) mindestens ein schmelzbares Material, das einen flüchtigen Störstoff enthält. Hierbei kann die Steuereinheit der Anlage konfiguriert sein, die Anlage zu veranlassen, das mindestens eine schmelzbare Material, das den flüchtigen Störstoff enthält, in den Innenraum der Vorrichtung hinein zu fördern und/oder das mindestens eine schmelzbare Material in der Vorrichtung zu schmelzen.

Die Steuereinheit der erfindungsgemäßen Anlage kann konfiguriert sein, zu veranlassen, dass das mindestens eine schmelzbare Material, das den flüchtigen Störstoff enthält, innerhalb des Innenraums der Vorrichtung gefördert wird, bevorzugt zu einem Ausgang der Vorrichtung.

Das schmelzbare Material der Anlage kann ein rezykliertes Material enthalten oder daraus bestehen.

Ferner kann das schmelzbare Material der Anlage einen Kunststoff enthalten oder daraus bestehen. Der Kunststoff kann ausgewählt sein aus der Gruppe bestehend aus Polyolefinen, Polyester, Polyamide und Kombinationen hiervon. Besonders bevorzugt ist der Kunststoff ein Polyolefin, insbesondere ein Polyolefin-Rezyklat.

In der Anlage kann der Anschluss der Vorrichtung über einem Kopfraum einer Schmelzoberfläche eines im Innenraum der Vorrichtung vorliegenden, geschmolzenen Materials angeordnet sein, wobei der Anschluss optional ein Entgasungsanschluss der Vorrichtung ist.

Ferner kann die Steuereinheit der Anlage konfiguriert sein, die Anlage zu veranlassen, zur Förderung des Gases aus dem Innenraum der Vorrichtung in die Fluidleitung, eine fluidische Verbindung der Fluidleitung mit einer weiteren Fluidleitung, die mit einer Umgebung eines die Vorrichtung enthaltenden Gebäudes verbunden ist, zu blockieren, wobei das Blockieren bevorzugt ein Schalten eines Ventils der Fluidleitung oder der zweiten Fluidleitung umfasst.

Die Anlage kann eine Pumpe, bevorzugt eine Vakuumpumpe, enthalten und die Steuereinheit kann konfiguriert sein, die Anlage zu veranlassen, das Gas aus dem Innenraum der Vorrichtung mithilfe der Pumpe zu fördern. Die Pumpe kann eine Entgasungs-Pumpe der Vorrichtung sein. Ferner kann die Steuereinheit konfiguriert sein, die Anlage zu veranlassen, zur Förderung des Gases aus dem Innenraum der Vorrichtung in die Fluidleitung, an die Fluidleitung einen Unterdruck anzulegen, bevorzugt dergestalt, dass ein Druck in der Fluidleitung ≤ 100 mbar, bevorzugt ≤ 80 mbar, besonders bevorzugt ≤ 75 mbar, beträgt.

Abgesehen davon kann die Anlage eine Spülgasquelle enthalten, die Spülgas enthält, und die Steuereinheit kann konfiguriert sein, die Anlage zu veranlassen, das Gas aus dem Innenraum der Vorrichtung mithilfe des Spülgases zu fördern, wobei das Spülgas bevorzugt Stickstoff enthält oder daraus besteht.

Die Steuereinheit der Anlage kann konfiguriert sein, die Anlage zu veranlassen, nach dem Fördern von dem Gas aus dem Innenraum der Vorrichtung in die Fluidleitung und vor dem Fördern des mindestens einen flüchtigen Störstoffs zu dem mindestens einem Detektor, den Druck des Gases der Fluidleitung zu erhöhen, bevorzugt auf einen Druck von ≥ 1000 mbar, bevorzugt ≥ 2000 mbar. Die Steuereinheit der Anlage ist hierfür bevorzugt konfiguriert, zu veranlassen, dass ein Gas aus einer Gasquelle der Anlage in die Fluidleitung eingeleitet wird, wobei das Gas besonders bevorzugt ausgewählt ist aus der Gruppe bestehend aus Luft, Stickstoff, Edelgas und Kombinationen hiervon.

Ferner kann die Steuereinheit der Anlage konfiguriert sein, die Anlage zu veranlassen, nach dem Fördern von dem Gas aus dem Innenraum der Vorrichtung in die Fluidleitung und vor dem Fördern des mindestens einen flüchtigen Störstoffs zu dem mindestens einem Detektor das Gas der Fluidleitung zu temperieren, bevorzugt auf eine Temperatur im Bereich einer Temperatur, welche das geschmolzene Material im Innenraum der Vorrichtung aufweist. Hierbei kann die Steuereinheit der Anlage bevorzugt konfiguriert sein, die Anlage zu veranlassen, das Temperieren mithilfe eines Heizelements der Anlage durchzuführen.

Zudem kann die Steuereinheit der Anlage konfiguriert sein, die Anlage zu veranlassen, nach dem Fördern von dem Gas aus dem Innenraum der Vorrichtung in die Fluidleitung und vor dem Fördern des mindestens einen flüchtigen Störstoffs zu dem mindestens einem Detektor das Gas der Fluidleitung durch mindestens eine Vorrichtung der Anlage zu leiten, die zur Aufkonzentration des mindestens einen flüchtigen Störstoffs geeignet ist, den mindestens einen flüchtigen Störstoff in dieser mindestens einen Vorrichtung zu konzentrieren, optional über ein Kondensieren, Adsorbieren und/oder Absorbieren des mindestens einen flüchtigen Störstoffs in der mindestens einen Vorrichtung, und den mindestens einen konzentrierten flüchtigen Störstoff aus der mindestens einen Vorrichtung freizusetzen, bevorzugt über eine Erhöhung der Temperatur der mindestens einen Vorrichtung.

Die mindestens eine Vorrichtung der Anlage, die zur Aufkonzentration des mindestens einen flüchtigen Störstoffs geeignet ist, kann mindestens eine Kühlfalle, bevorzugt mindestens zwei Kühlfallen, besonders bevorzugt mindestens drei Kühlfallen, ganz besonders bevorzugt mindestens vier Kühlfallen, enthalten oder daraus bestehen. Die mindestens zwei Kühlfallen, mindestens drei Kühlfallen und/oder mindestens vier Kühlfallen können in Serie entlang der Fluidleitung angeordnet sein. Ferner kann die Steuereinheit der Anlage konfiguriert sein, zu veranlassen, die Kühlfallen jeweils auf zueinander verschiedenen Temperaturen zu temperieren.

Ferner kann die mindestens eine Vorrichtung der Anlage, die zur Aufkonzentration des mindestens einen flüchtigen Störstoffs geeignet ist, mindestens einen Behälter, der ein Material enthält, das geeignet ist den mindestens einen flüchtigen Störstoff zu absorbieren und/oder zu adsorbieren, bevorzugt zudem mindestens einen zweiten Behälter, der ein Material enthält, das geeignet ist, den mindestens einen flüchtigen Störstoff zu absorbieren und/oder zu adsorbieren, enthalten oder daraus bestehen. Der mindestens eine zweite Behälter ist besonders bevorzugt in einer weiteren Fluidleitung angeordnet, die stromaufwärts des mindestens einen Behälters von der Fluidleitung abzweigt und fluidisch mit dem mindestens einen Detektor verbunden ist, optional dergestalt, dass die weitere Fluidleitung stromabwärts des mindestens einen Behälters in die Fluidleitung mündet.

Abgesehen davon kann die mindestens eine Vorrichtung der Anlage, die zur Aufkonzentration des mindestens einen flüchtigen Störstoffs geeignet ist, mindestens ein Heizelement aufweisen. Das mindestens eine Heizelement ist bevorzugt ausgewählt aus der Gruppe bestehend aus Widerstandsheizung, Peltierelement, Strahlungsheizung und Kombinationen hiervon.

Darüber hinaus kann die mindestens eine Vorrichtung der Anlage, die zur Aufkonzentration des mindestens einen flüchtigen Störstoffs geeignet ist, mindestens ein Kühlelement aufweisen. Das mindestens eine Kühlelement ist bevorzugt ausgewählt aus der Gruppe bestehend aus aktives Kühlelement, passives Kühlelement und Kombinationen hiervon. Das aktive Kühlelement ist bevorzugt ausgewählt aus der Gruppe bestehend aus Peltierelement, Heatpipes, Ventilator, elektrisch betriebenes Kühlsystem mit Kältemittel und Kombinationen hiervon. Das passive Kühlelement ist bevorzugt ausgewählt aus der Gruppe bestehend aus Radiatorelement, flüssige Gase und Kombinationen hiervon.

Die Anlage kann eine Pumpe enthalten und die Steuereinheit der Anlage kann konfiguriert sein, zu veranlassen, dass das Fördern des mindestens einen flüchtigen Störstoffs zu dem mindestens einen Detektor mithilfe der Pumpe durchgeführt wird. Bevorzugt ist die Pumpe in der Fluidleitung oder in einer Bypass-Fluidleitung zur Fluidleitung enthalten.

Ferner kann die Anlage eine ein Gas enthaltende Gasquelle aufweisen und die Steuereinheit der Anlage konfiguriert sein, zu veranlassen, dass das Fördern des mindestens einen flüchtigen Störstoffs zu dem mindestens einen Detektor mithilfe des Gases der Gasquelle durchgeführt wird. Die Gasquelle ist bevorzugt fluidisch mit der Fluidleitung verbunden. Ferner kann die Gasquelle ein Gas enthalten, das ausgewählt ist aus der Gruppe bestehend aus Luft, Stickstoff, Edelgas und Kombinationen hiervon.

Der mindestens eine Detektor der Anlage kann mindestens einen Gaschromatographen, bevorzugt mindestens zwei Gaschromatographen, enthalten oder daraus bestehen und die Steuereinheit der Anlage kann konfiguriert sein, zu veranlassen, eine Gaschromatographie zum Detektieren des mindestens einen flüchtigen Störstoffs durchzuführen. Die Steuereinheit der Anlage ist bevorzugt konfiguriert, zu veranlassen, dass der mindestens eine flüchtige Störstoff mithilfe eines Halbleiter-Gassensors detektiert wird.

Abgesehen davon kann der mindestens eine Detektor der Anlage mindestens einen Gasdetektor, bevorzugt einen Array von mindestens zwei Gasdetektoren, enthalten oder daraus bestehen und die Steuereinheit der Anlage konfiguriert ist, zu veranlassen, eine Gasdetektion zum Detektieren des mindestens einen flüchtigen Störstoffs durchzuführen. Der mindestens eine Gasdetektor ist bevorzugt ein Gassensor.

Die Steuereinheit der Anlage kann ferner konfiguriert sein, zu veranlassen, eine Konzentration, welche der mindestens eine flüchtige Störstoff in einem Teil im Innenraum der Vorrichtung aufweist, der sich im Bereich des Anschlusses der Vorrichtung befindet, zu berechnen. Bei der Berechnung werden bevorzugt Parameter berücksichtigt, die ausgewählt sind aus der Gruppe bestehend aus einer Temperatur des geschmolzenen Materials, einem Verteilkoeffizienten des Störstoffs zwischen dem Gas und dem geschmolzenen Material, einem Druck des Gases, einem Fluss des Gases, einem Fluss des geschmolzenen Materials, einer Viskosität des geschmolzenen Materials und Kombinationen hiervon. Ferner kann die Berechnung Regel-basiert, Modell-basiert und/oder mit Hilfe von künstlicher Intelligenz erfolgen.

Abgesehen davon kann die Steuereinheit der Anlage konfiguriert sein, zu veranlassen, ein Material, das aus der Vorrichtung austritt, basierend auf der berechneten Konzentration des mindestens einen flüchtigen Störstoffs, zu fraktionieren. Das Fraktionieren kann über einen Transport des aus der Vorrichtung austretenden Materials in verschiedene Behälter der Anlage erfolgen, wobei der Transport besonders bevorzugt über ein Förderband der Anlage erfolgt.

Anhand der nachfolgenden Figuren und Beispiele soll der erfindungsgemäße Gegenstand näher erläutert werden, ohne diesen auf die hier dargestellten, spezifischen Ausführungsformen einschränken zu wollen.

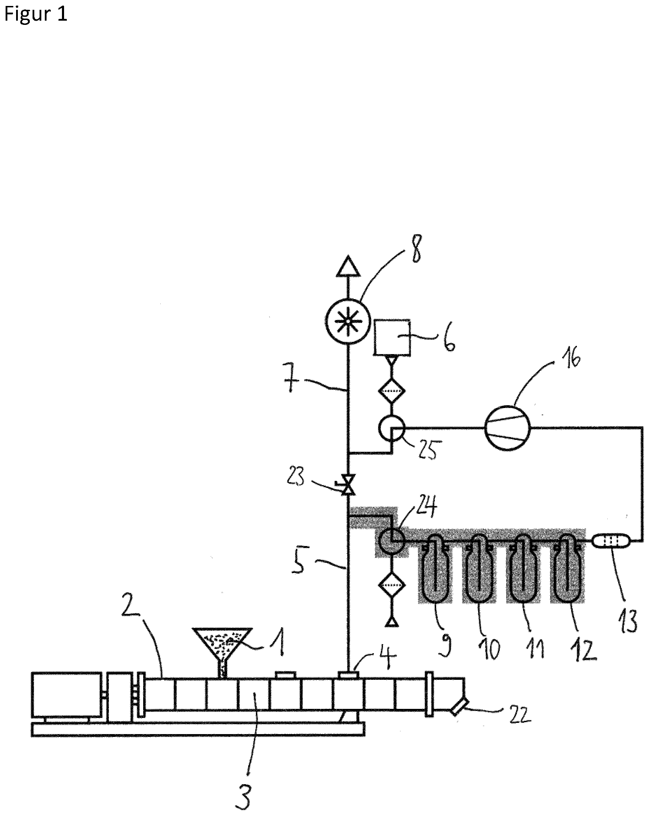

Figur 1 zeigt schematisch eine erfindungsgemäße Anlage. Die Anlage enthält ein schmelzbares Material 1, das einen flüchtigen Störstoff enthält, und eine Vorrichtung 2, die zum Schmelzen und Fördern des mindestens einen schmelzbaren Materials 1 geeignet ist. Die Vorrichtung 2 weist einen Innenraum 3, einen Anschluss 4 für eine Fluidleitung 5, der sich vom Innenraum 3 zu einem Außenraum der Vorrichtung 2 erstreckt, und eine Fluidleitung 5, die mit dem Anschluss 4 fluidleitend verbunden ist, auf. Ferner enthält die Anlage einen Detektor 6, der zur Detektion des mindestens einen flüchtigen Störstoffs geeignet ist, und eine Steuereinheit (nicht gezeigt). Die Steuereinheit ist konfiguriert, die Anlage zu veranlassen, das schmelzbare Material 1, das den flüchtigen Störstoff enthält, in den Innenraum 3 der Vorrichtung 2 hinein zu fördern, das schmelzbare Material 1 in der Vorrichtung 2 zu schmelzen, ein Gas, das den mindestens einen flüchtigen Störstoff des Materials 1 enthält, aus dem Innenraum 3 der Vorrichtung 2 in die Fluidleitung 5 zu fördern, den mindestens einen flüchtigen Störstoff über die Fluidleitung 5 zu dem Detektor 6 zu fördern, und den mindestens einen flüchtigen Störstoff mit dem Detektor 6 zu detektieren. In dieser Ausführungsform weist die Anlage ferner eine erste Vorrichtung 9 zur Aufkonzentration des mindestens einen flüchtigen Störstoffs (hier: eine erste Kühlfalle), eine zweite Vorrichtung 10 zur Aufkonzentration des mindestens einen flüchtigen Störstoffs (hier: eine zweite Kühlfalle), eine dritte Vorrichtung 11 zur Aufkonzentration des mindestens einen flüchtigen Störstoffs (hier: eine dritte Kühlfalle), eine vierte Vorrichtung 12 zur Aufkonzentration des mindestens einen flüchtigen Störstoffs (hier: eine vierte Kühlfalle) und eine fünfte Vorrichtung 13 zur Aufkonzentration des mindestens einen flüchtigen Störstoffs (hier: ein Thermodesorptions-Röhrchen) auf. Durch ein Schließen des 1. Ventils 23 kann mithilfe der Pumpe 8 Gas aus dem Innenraum 3 der Vorrichtung 2 und durch die Vorrichtungen 9, 10, 11, 12, 13 zur Aufkonzentration des mindestens einen flüchtigen Störstoffs gefördert werden. In besagten Vorrichtungen 9, 10, 11, 12, 13 sammelt sich der mindestens eine flüchtige Störstoff und wird aufkonzentriert. Über die weitere Pumpe 16 kann der aufkonzentrierte, mindestens eine Störstoff anschließend zum Detektor 6 gefördert und dort detektiert werden. Hierbei können die hierfür nötigen Förderwege über ein Schalten des 2. Ventils 24 und/oder 3. Ventils der Anlage eingestellt werden.

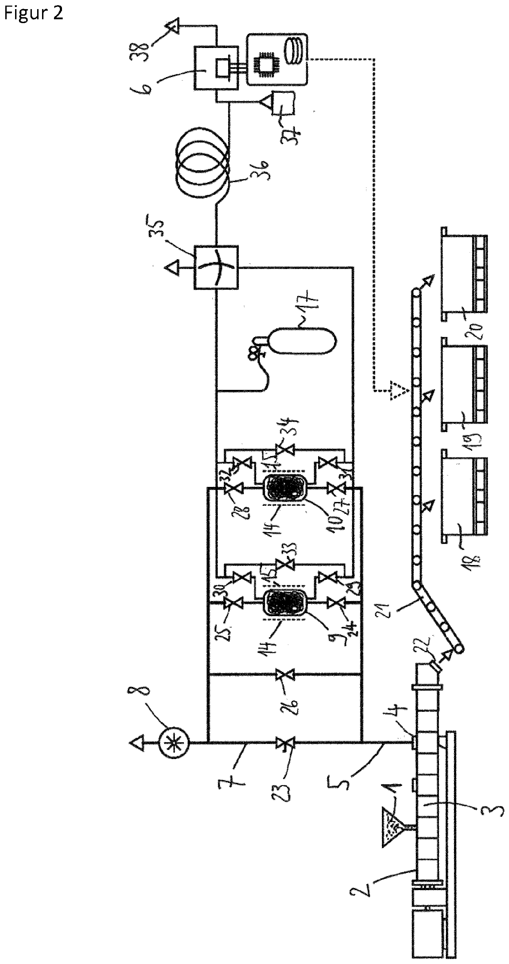

Figur 2 zeigt schematisch eine weitere erfindungsgemäße Anlage, die im Wesentlichen der in Figur 1 gezeigten Anlage entspricht. Ein Unterschied ist, dass diese Anlage lediglich eine Vorrichtung 9 zur Aufkonzentration des mindestens einen flüchtigen Störstoffs (hier: eine erste Kühlfalle) und eine zweite Vorrichtung 10 zur Aufkonzentration des mindestens einen flüchtigen Störstoffs (hier: eine zweite Kühlfalle) aufweist, wobei besagte Vorrichtungen 9, 10 nicht fluidisch in Serie, sondern fluidisch parallel angeordnet sind. Dies erlaubt eine Vermeidung von Totzeiten, da während einer Detektion von mindestens einem Störstoff, der aus einer der beiden Vorrichtungen 9, 10 freigesetzt wurde, ein gleichzeitiges Aufkonzentrieren von mindestens einem Störstoff in der anderen der beiden Vorrichtungen 9, 10 erlaubt. Um dies zu erreichen, können die Ventile 24, 25, 26, 27, 28, 29, 30, 31, 32, 33, 34 dieser Anlage entsprechend geschalten werden. Ein weiterer Unterschied zur Anlage der Figur 1 ist, dass die Anlage zur Förderung des mindestens einen Störstoffs zum Detektor 6 keine Pumpe enthält, sondern eine Gasquelle 17. In der Fluidleitung auf dem Weg zum Detektor 6 ist hier ferner ein Ventil 35 angeordnet, mit dem Gas, das den mindestens einen Störstoff enthält, am Detektor 6 vorbei in einen Außenraum der Vorrichtung 2 geleitet werden kann. Zudem ist in dieser Fluidleitung eine Verweilschleife 36 angeordnet. Mit dem Detektor 6 ist eine Makeup-Gasquelle 37 fluidisch verbunden. Ferner ist der Ausgang 38 des Detektors 6 illustriert. Ein zusätzlicher Unterschied zur Anlage der Figur 1 ist, dass die Anlage am Ausgang 22 der Vorrichtung 2 ein Förderband 21 aufweist, mit dem am Ausgang 22 der Vorrichtung 2 austretendes Material in einen ersten Behälter 18, einen zweiten Behälter 19 oder einen dritten Behälter 20 gefördert werden kann. Diese Förderung kann basierend auf der Konzentration des mindestens einen flüchtigen Störstoffs erfolgen, die von der Steuereinheit der Anlage für einen bestimmten Teil des Materials im Bereich des Anschlusses 4 der Vorrichtung 2 ermittelt wurde.

### Beispiel 1 - Erfindungsgemäßes Verfahren

Zunächst wird mindestens ein schmelzbares Material, das einen flüchtigen Störstoff enthält, bereitgestellt. In diesem Fall handelt es sich um ein Polyethylen-Rezyklat.

Zudem wird eine Vorrichtung bereitgestellt, die zum Schmelzen und Fördern des mindestens einen schmelzbaren Materials geeignet ist und die einen Innenraum, einen Anschluss für eine Fluidleitung, der sich vom Innenraum zu einem Außenraum des Vorrichtung erstreckt, und eine Fluidleitung, die mit dem Anschluss fluidleitend verbunden ist, enthält. In diesem Fall handelt es sich bei der Vorrichtung um einen Extruder, der einen Entgasungsanschluss aufweist, an den als Fluidleitung eine Entgasungsleitung angeschlossen ist, die fluidisch mit einem Außenraum eines Gebäudes, in dem der Extruder aufgestellt ist, verbindbar ist (z. B. über mindestens ein schaltbares Ventil).

Das Polyethylen-Rezyklat wird in den Extruder gefördert, dort aufgeschmolzen und extrudiert, d. h. innerhalb des Innenraums des Extruders zu einem Ausgang des Extruders (hier: eine Düse) gefördert.

Währenddessen wird ein Gas, das den mindestens einen flüchtigen Störstoff des Polyethylen-Rezyklats enthält, mithilfe einer Pumpe aus dem Innenraum des Extruders in die Entgasungsleitung gefördert. Hierbei ist eine fluidleitende Verbindung des Entgasungsanschlusses des Extruders zu einem Außenraum eines Gebäudes, in dem der Extruder aufgestellt ist, geschlossen.

Der mindestens eine flüchtige Störstoff wird zunächst durch fünf verschiedene Vorrichtungen zur Aufkonzentration des mindestens einen flüchtigen Störstoffs gefördert, beispielsweise vier Kühlfallen auf jeweils unterschiedlichen Temperaturen und ein Thermodesorptionsröhrchen. Anschließend wird der aufkonzentrierte Störstoff mittels einer Pumpe über die Fluidleitung zu mindestens einem Detektor gefördert, der zur Detektion des mindestens einen flüchtigen Störstoffs geeignet ist. In diesem Fall ist der mindestens eine Detektor ein Gaschromatograph.

Am Gaschromatographen wird der mindestens eine flüchtige Störstoff detektiert.

### Beispiel 2 - Weiteres erfindungsgemäßes Verfahren

Eine Compoundierer verarbeitet Material, das dem Compoundierer über eine Zufuhr zugeführt wird, und extrudiert das Material aus der Düse am Ausgang des Compoundierers.

Am Entgasungsdom des Compoundierers wird mithilfe von einem Unterdruckaggregat eine Entgasung des im Compoundierer befindlichen Materials durchgeführt. Hierbei sperrt das manuelle Schmetterlingsventil die Entgasungsleitung ab, wodurch der Gasstrom in über Ventile schaltbarer Weise entweder eine Bypassleitung passiert oder fluidisch parallel geschaltete Vorrichtungen zur Aufkonzentrierung des mindestens einen Störstoffs (hier als "Samplingeinheiten" bezeichnet) passiert. Die Samplingeinheiten enthalten ein temperiertes Volumen, das mit einem Adsorbens ausgestattet sein kann.

Zum Start der Aufkonzentrierung wird der Gasstrom vom Compoundierer durch die Samplingeinheiten geleitet. Nach Ablauf einer bestimmten Zeit wird der Gasstrom vom Compoundierer unterbrochen, eine gasleitende Verbindung von den Samplingeinheiten zu einer GC-Säule etabliert und die Samplingeinheiten mithilfe eines Trägergases unter Druck gesetzt. Gleichzeitig kann die Temperatur erhöht werden, um die Desorption von aufkonzentriertem mindestens einen Störstoff zu unterstützen. Das so erzeugte Gas wird durch das unter Druck gesetzte Trägergas auf eine GC-Säule eines Gaschromatographen injiziert. Hierbei durchströmt das Trägergas die GC-Säule, wodurch der Teil der Fluidleitung von den Samplingeinheiten zur GC-Säule gespült wird. Gegebenenfalls wird hierbei dem Trägergas noch ein Makeup-Gas zugemischt.

Die vom Gaschromatographen erzeugten Messdaten werden verarbeitet, wobei eine Sortiereinheit gesteuert basierend auf den verarbeiteten Messdaten gesteuert wird. Hierbei wird die Sortiereinheit dergestalt gesteuert, dass das den Compoundierer an der Düse verlassende Material in Abhängigkeit von dessen festgestellten Störstoffgehalt abschnittsweise in unterschiedliche Gebinde gefördert wird. Die unterschiedlichen Gebinde können zwei Fraktionen mit unterschiedlicher Reinheitsklasse sowie eine zu entsorgende Fraktion darstellen.

Konkrete Parameter für dieses Ausführungsbeispiel können für das Re-Compoundieren von Polypropylen-Rezyklat angegeben werden. Hier konnte bei einer Prozesstemperatur von 200 °C und einem angelegten Unterdruck von 70 mbar absolut eine Probenmenge von 0,1 g je 1 kg Material bei 0 °C Samplingtemperatur aufgefangen werden, mit einem Wassergehalt zwischen 75 und 80 Gewichtsprozent. Der nicht-wässrige Anteil der gewonnenen Proben wurde mittels einer Polyethylen-Glykol-Chromatographiesäule mit Innendurchmesser 0,25 mm bei 2 µL/min Fluss und einer Temperaturrampe von 40 °C nach 230 °C aufgetrennt. Charakteristische Retentionspeaks relevanter Stoffe konnten beobachtet werden, darunter Buttersäure und Essigsäure. Die Einhaltung entsprechend festzulegender Grenzwerte für die Zielverwendung konnte durch Sortieren in Gebinde erreicht werden, bei denen beispielsweise eine erste Fraktion beide Grenzwerte unterschritt, eine zweite Fraktion den Buttersäuregrenzwert bei moderat erhöhter Essigsäurekonzentration unterschritt und eine dritte Fraktion das unbrauchbare Material zusammenfasst.

Andere Verwendungsanforderungen können spezifische Stoffe betreffen, zum Beispiel Limonen, oder Kombinationen von Stoffen.

### Bezugszeichenliste

- 1:: schmelzbares Material, das einen flüchtigen Störstoff enthält;
- 2:: Vorrichtung, die zum Schmelzen und Fördern des mindestens einen schmelzbaren Materials geeignet ist;
- 3:: Innenraum der Vorrichtung;
- 4:: Anschluss der Vorrichtung für eine Fluidleitung;
- 5:: Fluidleitung;
- 6:: Detektor;
- 7:: weitere Fluidleitung, die mit einer Umgebung eines die Vorrichtung enthaltenden Gebäudes verbunden ist;
- 8:: Pumpe zur Förderung von Gas aus dem Innenraum der Vorrichtung;
- 9:: erste Vorrichtung zur Aufkonzentration des mindestens einen flüchtigen Störstoffs;
- 10:: zweite Vorrichtung zur Aufkonzentration des mindestens einen flüchtigen Störstoffs;
- 11:: dritte Vorrichtung zur Aufkonzentration des mindestens einen flüchtigen Störstoffs;
- 12:: vierte Vorrichtung zur Aufkonzentration des mindestens einen flüchtigen Störstoffs;
- 13:: fünfte Vorrichtung zur Aufkonzentration des mindestens einen flüchtigen Störstoffs;
- 14:: Heizelement;
- 15:: Kühlelement;
- 16:: Pumpe zur Förderung des mindestens einen Störstoffs zum Detektor;
- 17:: Gasquelle zur Förderung des mindestens einen Störstoffs zum Detektor;
- 18:: erster Behälter der Anlage;
- 19:: zweiter Behälter der Anlage;
- 20:: dritter Behälter der Anlage;
- 21:: Förderband der Anlage;
- 22:: Ausgang der Vorrichtung, die zum Schmelzen und Fördern des mindestens einen schmelzbaren Materials geeignet ist;
- 23:: 1. Ventil;
- 24:: 2. Ventil;
- 25:: 3. Ventil;
- 26:: 4. Ventil;
- 27:: 5. Ventil;
- 28:: 6. Ventil;
- 29:: 7. Ventil;
- 30:: 8. Ventil;
- 31:: 9. Ventil;
- 32:: 10. Ventil;
- 33:: 11. Ventil;
- 34:: 12. Ventil;
- 35:: 13. Ventil;
- 36:: Verweilschleife;
- 37:: Makeup-Gasquelle;
- 38:: Ausgang des Detektors.

## Patentansprüche

1. Verfahren zur Detektion von mindestens einem flüchtigen Störstoff in einem schmelzbaren Material, umfassend oder bestehend aus den folgenden Schritten:
a) Bereitstellen von mindestens einem schmelzbaren Material, das einen flüchtigen Störstoff enthält;
b) Bereitstellen von einer Vorrichtung, die zum Schmelzen und Fördern des mindestens einen schmelzbaren Materials geeignet ist und die einen Innenraum, einen Anschluss für eine Fluidleitung, der sich vom Innenraum zu einem Außenraum des Vorrichtung erstreckt, und eine Fluidleitung, die mit dem Anschluss fluidleitend verbunden ist, enthält;
c) Fördern von dem mindestens einen schmelzbaren Material, das den flüchtigen Störstoff enthält, in den Innenraum der Vorrichtung hinein und schmelzen des mindestens einen schmelzbaren Materials in der Vorrichtung;
d) Fördern von einem Gas, das den mindestens einen flüchtigen Störstoff des Materials enthält, aus dem Innenraum der Vorrichtung in die Fluidleitung;
e) Fördern des mindestens einen flüchtigen Störstoffs zu mindestens einem Detektor, der zur Detektion des mindestens einen flüchtigen Störstoffs geeignet ist; und
f) Detektieren des mindestens einen flüchtigen Störstoffs mit dem mindestens einen Detektor.

2. Verfahren gemäß dem vorhergehenden Anspruch, **dadurch gekennzeichnet, dass** in dem Innenraum der Vorrichtung ein schmelzbares Material bereitgestellt wird, das
i) ein recycliertes Material enthält oder daraus besteht; und/oder
ii) einen Kunststoff enthält oder daraus besteht, wobei der Kunststoff bevorzugt ausgewählt ist aus der Gruppe bestehend aus Polyolefinen, Polyester, Polyamide und Kombinationen hiervon, wobei der Kunststoff besonders bevorzugt ein Polyolefin ist, insbesondere ein Polyolefin-Recylat ist.

3. Verfahren gemäß einem der vorhergehenden Ansprüche, **dadurch gekennzeichnet, dass** das Fördern von dem Gas aus dem Innenraum der Vorrichtung in die Fluidleitung
i) mithilfe einer Pumpe, bevorzugt eine Vakuumpumpe, erfolgt, wobei die Pumpe optional eine Pumpe ist, die zur Entgasung der Vorrichtung eingesetzt wird, und/oder das Fördern von dem Gas aus dem Innenraum der Vorrichtung in die Fluidleitung umfasst, an die Fluidleitung einen Unterdruck anzulegen, bevorzugt dergestalt, dass ein Druck in der Fluidleitung ≤ 100 mbar, bevorzugt ≤ 80 mbar, besonders bevorzugt ≤ 75 mbar, beträgt; und/oder
ii) mithilfe von einem Spülgas erfolgt, wobei das Spülgas bevorzugt Stickstoff enthält oder daraus besteht.

4. Verfahren gemäß einem der vorhergehenden Ansprüche, **dadurch gekennzeichnet, dass** nach dem Fördern von dem Gas aus dem Innenraum der Vorrichtung in die Fluidleitung und vor dem Fördern des mindestens einen flüchtigen Störstoffs zu dem mindestens einem Detektor
i) der Druck des Gases der Fluidleitung erhöht wird, bevorzugt auf einen Druck von ≥ 1000 mbar, bevorzugt ≥ 2000 mbar, wobei hierfür bevorzugt ein Gas aus einer Gasquelle in die Fluidleitung eingeleitet wird, wobei das Gas besonders bevorzugt ausgewählt ist aus der Gruppe bestehend aus Luft, Stickstoff, Edelgas und Kombinationen hiervon; und/oder
ii) das Gas der Fluidleitung temperiert wird, bevorzugt auf eine Temperatur im Bereich einer Temperatur, welche das geschmolzene Material im Innenraum der Vorrichtung aufweist, wobei das Temperieren bevorzugt mithilfe eines Heizelements erfolgt; und/oder
iii) das Gas der Fluidleitung durch mindestens eine Vorrichtung geleitet wird, die zur Aufkonzentration des mindestens einen flüchtigen Störstoffs geeignet ist, und der mindestens einen flüchtigen Störstoff in dieser mindestens einen Vorrichtung konzentriert wird, optional über ein Kondensieren, Adsorbieren und/oder Absorbieren des mindestens einen flüchtigen Störstoffs in der mindestens einen Vorrichtung, und anschließend der mindestens eine konzentrierte flüchtige Störstoff aus der mindestens einen Vorrichtung freigesetzt wird, bevorzugt über eine Erhöhung der Temperatur der mindestens einen Vorrichtung.

5. Verfahren gemäß dem vorhergehenden Anspruch, **dadurch gekennzeichnet, dass** die mindestens eine Vorrichtung, die zur Aufkonzentration des mindestens einen flüchtigen Störstoffs geeignet ist,
i) mindestens eine Kühlfalle, bevorzugt mindestens zwei Kühlfallen, besonders bevorzugt mindestens drei Kühlfallen, ganz besonders bevorzugt mindestens vier Kühlfallen, enthält oder daraus besteht, wobei die mindestens zwei Kühlfallen, mindestens drei Kühlfallen und/oder mindestens vier Kühlfallen insbesondere in Serie entlang der Fluidleitung angeordnet sind und/oder auf zueinander verschiedene Temperaturen temperiert sind; und/oder
ii) mindestens einen Behälter, der ein Material enthält, das geeignet ist den mindestens einen flüchtigen Störstoff zu absorbieren und/oder zu adsorbieren, bevorzugt zudem mindestens einen zweiten Behälter, der ein Material enthält, das geeignet ist, den mindestens einen flüchtigen Störstoff zu absorbieren und/oder zu adsorbieren, enthält oder daraus besteht, wobei der mindestens eine zweite Behälter besonders bevorzugt in einer weiteren Fluidleitung angeordnet ist, die stromaufwärts des mindestens einen Behälters von der Fluidleitung abzweigt und fluidisch mit dem mindestens einen Detektor verbunden ist, optional dergestalt, dass die weitere Fluidleitung stromabwärts des mindestens einen Behälters in die Fluidleitung mündet; und/oder
iii) mindestens ein Heizelement aufweist, wobei das mindestens eine Heizelement bevorzugt ausgewählt ist aus der Gruppe bestehend aus Widerstandsheizung, Peltierelement, Strahlungsheizung und Kombinationen hiervon; und/oder
iv) mindestens ein Kühlelement aufweist, wobei das mindestens eine Kühlelement bevorzugt ausgewählt ist aus der Gruppe bestehend aus aktives Kühlelement, passives Kühlelement und Kombinationen hiervon, wobei das aktive Kühlelement bevorzugt ausgewählt ist aus der Gruppe bestehend aus Peltierelement, Heatpipes, Ventilator, elektrisch betriebenes Kühlsystem mit Kältemittel und Kombinationen hiervon und/oder das passive Kühlelement bevorzugt ausgewählt ist aus der Gruppe bestehend aus Radiatorelement, flüssige Gase und Kombinationen hiervon.

6. Verfahren gemäß einem der vorhergehenden Ansprüche, **dadurch gekennzeichnet, dass** das Fördern des mindestens einen flüchtigen Störstoffs zu dem mindestens einen Detektor
i) mithilfe einer Pumpe durchgeführt wird, wobei die Pumpe bevorzugt in der Fluidleitung oder in einer Bypass-Fluidleitung zur Fluidleitung enthalten ist; und/oder
ii) mithilfe eines Gases aus einer Gasquelle durchgeführt wird, wobei die Gasquelle bevorzugt fluidisch mit der Fluidleitung verbunden ist und/oder ein Gas enthält, das ausgewählt ist aus der Gruppe bestehend aus Luft, Stickstoff, Edelgas und Kombinationen hiervon.

7. Verfahren gemäß einem der vorhergehenden Ansprüche, **dadurch gekennzeichnet, dass** der mindestens eine Detektor
i) mindestens einen Gaschromatographen, bevorzugt mindestens zwei Gaschromatographen, enthält oder daraus besteht und eine Gaschromatographie zum Detektieren des mindestens einen flüchtigen Störstoffs durchgeführt wird, wobei der mindestens eine flüchtige Störstoff bevorzugt mithilfe eines Halbleiter-Gassensors detektiert wird; und/oder
ii) mindestens ein Massenspektrometer enthält oder daraus besteht und eine Massenspektrometrie, bevorzugt eine PTR-Massenspektrometrie, zum Detektieren des mindestens einen flüchtigen Störstoffs durchgeführt wird; und/oder
iii) mindestens einen Gasdetektor, bevorzugt einen Array von mindestens zwei Gasdetektoren, enthält oder daraus besteht und eine Gasdetektion zum Detektieren des mindestens einen flüchtigen Störstoffs durchgeführt wird, wobei der mindestens eine Gasdetektor bevorzugt ein Gassensor ist.

8. Verfahren gemäß einem der vorhergehenden Ansprüche, **dadurch gekennzeichnet, dass** das Verfahren ferner umfasst:
i) Berechnung einer Konzentration, welche der mindestens eine flüchtige Störstoff in einem Teil im Innenraum der Vorrichtung aufweist, der sich im Bereich des Anschlusses Vorrichtung befindet, wobei bei der Berechnung bevorzugt Parameter berücksichtigt werden, die ausgewählt sind aus der Gruppe bestehend aus einer Temperatur des geschmolzenen Materials, einem Verteilkoeffizienten des Störstoffs zwischen dem Gas und dem geschmolzenen Material, einem Druck des Gases, einem Fluss des Gases, einem Fluss des geschmolzenen Materials, einer Viskosität des geschmolzenen Materials und Kombinationen hiervon, wobei die Berechnung besonders bevorzugt Regel-basiert, Modell-basiert und/oder mit Hilfe von künstlicher Intelligenz erfolgt;
ii) Optional ein Fraktionieren von Material, das aus der Vorrichtung austritt, basierend auf der berechneten Konzentration des mindestens einen flüchtigen Störstoffs, wobei das Fraktionieren bevorzugt über einen Transport des aus der Vorrichtung austretenden Materials in verschiedene Behälter erfolgt, wobei der Transport besonders bevorzugt über ein Förderband erfolgt.

9. Anlage zur Detektion von mindestens einem flüchtigen Störstoff in einem schmelzbaren Material, enthaltend oder bestehend aus:
a) eine Vorrichtung, die zum Schmelzen und Fördern von mindestens einem schmelzbaren Material geeignet ist und die einen Innenraum, einen Anschluss für eine Fluidleitung, der sich vom Innenraum zu einem Außenraum der Vorrichtung erstreckt, und eine Fluidleitung, die mit dem Anschluss fluidleitend verbunden ist, enthält;
b) mindestens ein Detektor, der zur Detektion von mindestens einem flüchtigen Störstoff, der in mindestens einem schmelzbaren Material enthalten ist, geeignet ist; und
c) eine Steuereinheit;
wobei die Steuereinheit konfiguriert ist, die Anlage zu veranlassen, ein Gas, das mindestens einen flüchtigen Störstoff eines schmelzbaren Materials enthält, aus dem Innenraum der Vorrichtung in die Fluidleitung zu fördern;
den mindestens einen flüchtigen Störstoff zu dem mindestens einem Detektor zu fördern, und
den mindestens einen flüchtigen Störstoff mit dem mindestens einen Detektor zu detektieren.

10. Anlage gemäß Anspruch 9, **dadurch gekennzeichnet**, das schmelzbare Material
i) ein rezykliertes Material enthält oder daraus besteht; und/oder
ii) einen Kunststoff enthält oder daraus besteht, wobei der Kunststoff bevorzugt ausgewählt ist aus der Gruppe bestehend aus Polyolefinen, Polyester, Polyamide und Kombinationen hiervon, wobei der Kunststoff besonders bevorzugt ein Polyolefin ist, insbesondere ein Polyolefin-Rezyklat ist.

11. Anlage gemäß einem der Ansprüche 9 oder 10, **dadurch gekennzeichnet, dass** die Anlage
i) eine Pumpe, bevorzugt eine Vakuumpumpe, enthält und die Steuereinheit konfiguriert ist, die Anlage zu veranlassen, das Gas aus dem Innenraum der Vorrichtung mithilfe der Pumpe zu fördern, wobei die Pumpe optional eine Entgasungs-Pumpe der Vorrichtung ist, und/oder die Steuereinheit konfiguriert ist, die Anlage zu veranlassen, zur Förderung des Gases aus dem Innenraum der Vorrichtung in die Fluidleitung, an die Fluidleitung einen Unterdruck anzulegen, bevorzugt dergestalt, dass ein Druck in der Fluidleitung ≤ 100 mbar, bevorzugt ≤ 80 mbar, besonders bevorzugt ≤ 75 mbar, beträgt; und/oder
ii) eine Spülgasquelle enthält, die Spülgas enthält, und die Steuereinheit konfiguriert ist, die Anlage zu veranlassen, das Gas aus dem Innenraum der Vorrichtung mithilfe des Spülgases zu fördern, wobei das Spülgas bevorzugt Stickstoff enthält oder daraus besteht.

12. Anlage gemäß einem der Ansprüche 9 bis 11, **dadurch gekennzeichnet, dass** die Steuereinheit konfiguriert ist, die Anlage zu veranlassen, nach dem Fördern von dem Gas aus dem Innenraum der Vorrichtung in die Fluidleitung und vor dem Fördern des mindestens einen flüchtigen Störstoffs zu dem mindestens einem Detektor,
i) den Druck des Gases der Fluidleitung zu erhöhen, bevorzugt auf einen Druck von ≥ 1000 mbar, bevorzugt ≥ 2000 mbar, wobei die Steuereinheit der Anlage bevorzugt konfiguriert ist, zu veranlassen, dass ein Gas aus einer Gasquelle der Anlage in die Fluidleitung eingeleitet wird, wobei das Gas besonders bevorzugt ausgewählt ist aus der Gruppe bestehend aus Luft, Stickstoff, Edelgas und Kombinationen hiervon; und/oder
ii) das Gas der Fluidleitung zu temperieren, bevorzugt auf eine Temperatur im Bereich einer Temperatur, welche das geschmolzene Material im Innenraum der Vorrichtung aufweist, wobei die Steuereinheit der Anlage bevorzugt konfiguriert ist, die Anlage zu veranlassen, das Temperieren mithilfe eines Heizelements der Anlage durchzuführen; und/oder
iii) das Gas der Fluidleitung durch mindestens eine Vorrichtung der Anlage zu leiten, die zur Aufkonzentration des mindestens einen flüchtigen Störstoffs geeignet ist, den mindestens einen flüchtigen Störstoff in dieser mindestens einen Vorrichtung zu konzentrieren, optional über ein Kondensieren, Adsorbieren und/oder Absorbieren des mindestens einen flüchtigen Störstoffs in der mindestens einen Vorrichtung, und den mindestens einen konzentrierten flüchtigen Störstoff aus der mindestens einen Vorrichtung freizusetzen, bevorzugt über eine Erhöhung der Temperatur der mindestens einen Vorrichtung.

13. Anlage gemäß Anspruch 12, **dadurch gekennzeichnet, dass** die mindestens eine Vorrichtung der Anlage, die zur Aufkonzentration des mindestens einen flüchtigen Störstoffs geeignet ist,
i) mindestens eine Kühlfalle, bevorzugt mindestens zwei Kühlfallen, besonders bevorzugt mindestens drei Kühlfallen, ganz besonders bevorzugt mindestens vier Kühlfallen, enthält oder daraus besteht, wobei die mindestens zwei Kühlfallen, mindestens drei Kühlfallen und/oder mindestens vier Kühlfallen insbesondere in Serie entlang der Fluidleitung angeordnet sind und/oder die Steuereinheit der Anlage konfiguriert ist, zu veranlassen, die Kühlfallen jeweils auf zueinander verschiedenen Temperaturen zu temperieren; und/oder
ii) mindestens einen Behälter, der ein Material enthält, das geeignet ist den mindestens einen flüchtigen Störstoff zu absorbieren und/oder zu adsorbieren, bevorzugt zudem mindestens einen zweiten Behälter, der ein Material enthält, das geeignet ist, den mindestens einen flüchtigen Störstoff zu absorbieren und/oder zu adsorbieren, enthält oder daraus besteht, wobei der mindestens eine zweite Behälter besonders bevorzugt in einer weiteren Fluidleitung angeordnet ist, die stromaufwärts des mindestens einen Behälters von der Fluidleitung abzweigt und fluidisch mit dem mindestens einen Detektor verbunden ist, optional dergestalt, dass die weitere Fluidleitung stromabwärts des mindestens einen Behälters in die Fluidleitung mündet; und/oder
iii) mindestens ein Heizelement aufweist, wobei das mindestens eine Heizelement bevorzugt ausgewählt ist aus der Gruppe bestehend aus Widerstandsheizung, Peltierelement, Strahlungsheizung und Kombinationen hiervon; und/oder
iv) mindestens ein Kühlelement aufweist, wobei das mindestens eine Kühlelement bevorzugt ausgewählt ist aus der Gruppe bestehend aus aktives Kühlelement, passives Kühlelement und Kombinationen hiervon, wobei das aktive Kühlelement bevorzugt ausgewählt ist aus der Gruppe bestehend aus Peltierelement, Heatpipes, Ventilator, elektrisch betriebenes Kühlsystem mit Kältemittel und Kombinationen hiervon und/oder das passive Kühlelement bevorzugt ausgewählt ist aus der Gruppe bestehend aus Radiatorelement, flüssige Gase und Kombinationen hiervon.

14. Anlage gemäß einem der Ansprüche 9 bis 13, **dadurch gekennzeichnet, dass** die Anlage
i) eine Pumpe enthält und die Steuereinheit der Anlage konfiguriert ist, zu veranlassen, dass das Fördern des mindestens einen flüchtigen Störstoffs zu dem mindestens einen Detektor mithilfe der Pumpe durchgeführt wird, wobei die Pumpe bevorzugt in der Fluidleitung oder in einer Bypass-Fluidleitung zur Fluidleitung enthalten ist; und/oder
ii) eine ein Gas enthaltende Gasquelle aufweist und die Steuereinheit der Anlage konfiguriert ist, zu veranlassen, dass das Fördern des mindestens einen flüchtigen Störstoffs zu dem mindestens einen Detektor mithilfe des Gases der Gasquelle durchgeführt wird, wobei die Gasquelle bevorzugt fluidisch mit der Fluidleitung verbunden ist und/oder ein Gas enthält, das ausgewählt ist aus der Gruppe bestehend aus Luft, Stickstoff, Edelgas und Kombinationen hiervon.

15. Anlage gemäß einem der Ansprüche 9 bis 14, **dadurch gekennzeichnet, dass** die Steuereinheit der Anlage ferner konfiguriert ist, zu veranlassen,
i) eine Konzentration, welche der mindestens eine flüchtige Störstoff in einem Teil im Innenraum der Vorrichtung aufweist, der sich im Bereich des Anschlusses der Vorrichtung befindet, zu berechnen, wobei bei der Berechnung bevorzugt Parameter berücksichtigt werden, die ausgewählt sind aus der Gruppe bestehend aus einer Temperatur des geschmolzenen Materials, einem Verteilkoeffizienten des Störstoffs zwischen dem Gas und dem geschmolzenen Material, einem Druck des Gases, einem Fluss des Gases, einem Fluss des geschmolzenen Materials, einer Viskosität des geschmolzenen Materials und Kombinationen hiervon, wobei die Berechnung besonders bevorzugt Regel-basiert, Modell-basiert und/oder mit Hilfe von künstlicher Intelligenz erfolgt;
ii) Optional Material, das aus der Vorrichtung austritt, basierend auf der berechneten Konzentration des mindestens einen flüchtigen Störstoffs, zu fraktionieren, wobei das Fraktionieren bevorzugt über einen Transport des aus der Vorrichtung austretenden Materials in verschiedene Behälter der Anlage erfolgt, wobei der Transport besonders bevorzugt über ein Förderband der Anlage erfolgt.
